# EUROPEAN PATENT APPLICATION

(11) **EP 4 050 538 A1**
(43) Date of publication of application: **31.08.2022**
(21) Application number: 21159538.4
(22) Date of filing: 26.02.2021
(51) Int. Cl.: G06Q 10/06, G06Q 50/28

(54) **METHOD AND SYSTEM FOR DETERMINING AND/OR OPTIMISING OPERATING CONDITIONS OF AN INTRALOGISTICS SYSTEM**

(71) Applicant: TGW Logistics Group GmbH, 4614 Marchtrenk (AT)
(72) Inventor: MANN, Alexander, 4600 Wels (AT); PSCHERNIG, Markus, 4702 Wallern an der Trattnach (AT)
(74) Representative: Burger, Hannes

(57) **Abstract**

A method (100) for determining operating conditions of an intralogistics system (10) with a plurality of components like conveyors, storage systems, shuttles, and others is proposed. The method (100) comprises a simulating (110) step and a step of generating process data from that simulation. A determination module (42) is configured to perform a step of determining modified component parameters and properties by analysing process data while optimising a predefined target variable (50) of the intralogistics system (10). In another aspect, an intralogistics system (10) with a simulation module (40) and a determination module (42), both accordingly configured to analyse process data and determine optimised operating conditions of an intralogistics system (10).

## Description

### FIELD OF THE INVENTION

The invention relates to a method, a computer program, and a computer-readable medium for determining operating conditions of an intralogistics system. Furthermore, the invention relates to an intralogistics system for order fulfilment such as a logistics distribution centre.

### BACKGROUND OF THE INVENTION

Intralogistics systems relate to distribution centres or warehouses and manage the logistical flow of information along with physical materials management. Such logistics systems usually comprise a vast variety of different components, in particular in relation to large distribution centres. Such components may be conveyors, sorters, intelligent racks, storage systems and other mechanical and electromechanical products. Furthermore, intelligent controlling systems, comprising controllers for the aforementioned components as well as warehouse control systems (WCS), comprising for example a programmable logic controller (PLC) and/or a material flow controller, control the complex interdependencies and processes within a distribution centre. Said intelligent controlling systems can obtain data from a warehouse management system (WMS), a material flow and/or sensor technology, such as RDIF scanners, barcode scanners, temperature and/or vibration sensors and the like, which are implemented within the intralogistics system.

The engineering and creation of a new distribution centre usually starts with collecting customer demands such as the desired throughput, performance, size, number of orders, type of items and similar data. Specially designed software supports the conceptual phase resulting in an engineering set defining the layout and basic operational information of a future distribution centre. In a next phase the intralogistics system is simulated based on the previously generated engineering set. This provides the opportunity to test the engineering set under simulated complex conditions. In a next step the real software package including warehouse management and material flow controller is configured and provided. This virtual commissioning stage is complemented by emulated mechanical components before the complete productive or real system is then implemented over several weeks or months.

Operating a distribution centre is a challenging task for any company in the logistics industry. In particular, the large number of components and a complexity of interdependencies of the various components creates demanding conditions for any human operator. Moreover, additional complexity may originate in a quick and/or spontaneous change of general conditions based on a change in customer demand, a change in orders, an unpredictable delay, when, for instance, a truck is arriving late. Thus, one of the main objectives of any operator and engineer of such an intralogistics system is performance management. In other words, the complex distribution centre needs to be configured and controlled to improve a performance, foremost the number of orders processed in a given timeframe.

The performance of an intralogistics system is dependent on many different factors such as settings and properties of the different mechanical components, software settings, layout options, and many more factors that need to be considered. At the same time, external conditions change due to exceptional order peaks such as Black Friday sales.

### DESCRIPTION OF THE INVENTION

Therefore, it can be seen as an objective that operators and engineers are able to handle the complex technology in intralogistics and flexibly adapt a configuration and settings of an intralogistics system to effectively allow performance optimisation. It can be also seen as an objective to determine improved or optimised operating conditions of such systems. These objectives are achieved by the subject-matter of the independent claims. Further exemplary embodiments are evident from the dependent claims and the following description.

A first aspect of the invention relates to a method for determining operating conditions of an intralogistics system, wherein the intralogistics system comprises a plurality of components. An intralogistics system may be, for instance, seen as an intralogistics system for order fulfilment, in particular a typical distribution centre, comprising a plurality of components.

Such components can comprise
- components for transporting goods, such as conveyors, automated guided vehicles (AGV), autonomous mobile robots (AMR) and the like, and/or
- components for sorting of goods, such as sorters and the like, and/or
- components for order fulfilment, such as automated and/or manual workstations, picking stations, picking robots and the like, and/or
- components for handling of goods, such as automated storage and retrieval systems, shuttle systems, stacker cranes, handling robots, loading and/or unloading systems, palletiser and depalletiser and the like, and/or
- components for storing of goods, such as storage systems, mobile racks, racks, automated racks, intelligent racks and the like, and/or
- components for containing and/or carrying goods, such as trays, cartons, containers, pallets, pouches, carriers for hanging goods and the like, and/or
- components for handling data, such as program modules, control systems and the like.

Such systems may become very complex as they need to inter-operate and failures may have an impact on several neighbouring systems causing system interruptions and productivity issues. At the same time complex software and hardware control systems are provided based on the input of hundreds and sometimes thousands of electromechanical units, software, hardware, sensors, switches, input devices, output devices and user interfaces of all stages of the intralogistics system. Every component comprises component configuration parameters, component properties and/or interaction properties.

A component configuration parameter can be adjustable or changeable settings of a component. For instance, a conveyor may be configured such that a certain forwarding acceleration, speed or speed patterns along with data communication with neighbouring components is achieved. This may also, according to an example, include cycle times for pickup of certain goods, for instance, from a certain shelf. In other words, a component configuration parameter can be set by an operator, by a software or a similar instance to influence a mechanical, electrical and/or data behaviour of a component.

A component can furthermore comprise component properties, which can be understood as given or pre-set features of a component. For instance, a conveyor may have a certain or defined length, width and height, and a certain power and performance of a driving unit to forward certain goods such as cartons or trays. Those component properties may be predefined and standardised to allow a modular system of components. Component properties may be stored in a suitable database to be used in context with the engineering and concept phase of an intralogistics project. Component properties can also comprise configuration data describing a detailed layout with components.

A third aspect to describe a component additionally or alternatively to component configuration parameters and component properties are interaction properties of a component. The idea behind this category of parameter is the fact that an intralogistics system comprises a variety of components which are directly connected or combined, or at least interact with any third components or objects. For instance, an interaction may happen between components such as a conveyor and a carton or a good which is forwarded on this conveyor. Depending on the weight of this carton or a temperature of a frozen good a higher or lower friction can be observed in the bearings or a surface of the conveyor rolls. For this reason, a forwarding speed of various cartons may differ.

In another example, a time for a handover process to a next connected component such as a sorter may depend on different influencing factors. Such dependencies and influencing factors are described in interaction properties and can also be stored in suitable databases and related formats.

When planning and engineering an intralogistics system, a simulation module is provided. This can be seen as a computer-implemented method or specialised software which is configured to artificially provide a digital twin of the future or existing intralogistics system and simulate a running live system. This includes all components, processes, settings, features, scenarios and so on. Such a simulation module or simulation system is configured using certain input parameters, in this case the method comprises the step of simulating the intralogistics system based on component configuration parameters, component properties and/or interaction properties. The concept of simulating complex technical systems is widely known in prior art. However, a quality and informative value of the simulation results may be significantly higher given the described categories of input parameters.

In a following step the simulation module generates process data which correspond to the component configuration parameters, component properties and/or interaction properties. This generation process of process data may also, according to an example, be part of the step of simulating the intralogistics system. Process data may be understood as output data of a simulation system, a real system or a mix of simulation systems and real systems. Process data can be defined as any information regarding status, condition, time information, sequence information, or similar data and information which describe a state of a complex system. This can be sensor data such as temperature, speed, image information, audio information, order data, stock inventory data, digital data, position information, and any other related information regarding the intralogistics system. This can include a time sequence of information which may allow a sequence of different data or information over a certain time period. For instance, typical process data may be timestamps of order processing like start and completion. Other examples of process data may be usage data and performance data indicating a utilisation of components like forwarding components, shuttles, elevators and others. In other words, process data can be seen as a result of a simulation, emulation, real systems or a mix of them.

Process data can be generated in different stages of the value creation or engineering process of an intralogistics system. For instance, simulation process data are generated by a simulation module or during a simulation process. There are further subcategories of process data generated in subsequent phases of the intralogistics provisioning cycle which will be described below in more detail. In the currently described step of generating process data with the simulation module the process data comprise, according to an example, simulation process data.

In a following step a determination module determines modified component configuration parameters, component properties and/or interaction properties of the intralogistics system. This determination module is configured to determine modified component configuration parameters, component properties and/or interaction properties by analysing process data of the intralogistics system and to optimise a predefined target variable of the intralogistics system. In particular, thereby a target value to a predefined target variable of the intralogistics system can be optimised. For instance, optimisation can be achieved by determining modified component configuration parameters, component properties and/or interaction properties. Such a determination module may comprise a data processing unit comprising a processor and appropriate software providing a computerised analysis capability. The determination module may comprise data interfaces for data communication for storing and reading input data and output data.

The determination module is provided with process data from different sources of the intralogistics system, in particular simulation process data. This can be for example a stream of real-time data or datasets from a data storage. The determination method may be dependent from the purpose and the kind of process data to be processed. For instance, the determination module may comprise data mining tools or similar software to detect data patterns and dependencies and derive further parameters. As the objective is an improvement of operating conditions of an intralogistics system, such an improvement or optimisation is based on a target variable. According to an embodiment of the invention, the predefined target variable is related to a cycle time, system performance, peak performance, system throughput, cost, energy consumption, truck schedule, and/or component failures. According to an example, the target variable is a combination of multiple weighted target variables.

This target variable can be one or more values or target measures that contribute to such an overall improvement of the system. In one example, the target variable is a key performance indicator (KPI) considering order fulfilment and order completion indicators, output performance indicators considering the number of orders, number of order lines or finished orders. In another example, the target variable is a utilisation factor or utilisation index of components.

In other words, the thought may be seen in a feedback of findings based on an analysis of process data from a simulation and deriving improved and more realistic input information for either a new simulation cycle or an application of the improved parameters to a real system. Due to the complexity of such intralogistics systems the dependencies and correlations are not always clear and transparent and are usually extremely complex to describe. Therefore, assumptions must be made in different stages of the engineering process. According to an example, real component properties are derived from process data and determined by the determination module and stored in a component property database replacing assumed component properties.

The term process data is supposed to describe all different kinds of process data from many possible stages and phases of the engineering and creation process of the intralogistics system. In other words, the determination module is not only capable to process simulation process data but also other kinds of process data in subsequent stages and phases like virtual commissioning stage and a productive real system. The determination of the component configuration parameters, component properties and/or interaction properties can timely overlap with the analysis of the process data. According to an example, the determination of the component configuration parameters, component properties and/or interaction properties is implemented as a subsequent step after an analysis step.

According to an embodiment of the invention, the step of analysing process data comprises a processing of simulation process data of the simulation module and/or virtual commissioning process data of a virtual commissioning module of an intralogistics system and/or real-system process data from a real system. In other words, process data comprises subcategories of process data depending on their origination. The technical nature of all subcategories of described process data can be seen as identical or similar and are generated such that an analysis as described above can be applied.

The virtual commissioning process data are generated in the virtual commissioning stage independently from the simulation stage. In the virtual commissioning stage the software such as warehouse management and material flow controller are already implemented for a real system provisioning and only the electromechanical installation is emulated. Virtual commissioning process data can be generated in any subsection of the virtual commissioning stage. At the end of the provisioning cycle of an intralogistics system the real system is built and physically provisioned on site. In other words, this can be seen as the productive running intralogistics system. Thus, from this real system the real system process data are generated.

According to an embodiment of the invention, the step of generating process data comprises a step of storing of process data in a centralised process data storage. The idea behind a centralised data storage can be seen in the possibility of a collection of large amounts of process data enabling a derivation of correlations and dependencies between processes and components. The person skilled in the art understands that only large amounts of process data can be a basis for sufficient quality of any analysis, for instance as a basis for machine learning methods. In one example, process data from a plurality of intralogistics systems or from customer implementations are stored in a centralised process data storage.

According to an embodiment of the invention, the method comprises, before storing process data into the process data storage, a step of converting the process data to a unified process data format. The rationale behind this may be seen in the fact that the different stages of the provisioning cycle of an intralogistics system may mostly generate similar process data and that the datasets can often differ in terms of data format. To allow a standardised and effective processing of large amounts of data, a common process data format can allow a structured and unified handling of data.

In one example, the unified process data format supports a generic domain data model for intralogistics systems. In one example, the unified data format supports learning methods across a plurality of intralogistics systems. This can be based on the ability of the proposed method to convert different kinds and formats of process data from different customer locations into one single converged storage location and unified data format. One advantage of the proposed method may be furthermore seen in the opportunity to generically describe an intralogistics system in a generic data model. This generic data model can then be applied to a plurality of different intralogistics systems and/or implementations. It furthermore allows an automated or machine learning across different customer locations and therefore an ongoing improvement of such generic intralogistics data model. According to an example, the centralised process data storage is a cloud storage. According to another example, the process data storage is configured to provide an interface to applications. The advantage can be seen in a possibility to integrate third-party solution providers and third-party applications.

According to an embodiment of the invention, the method comprises, after determining modified component configuration parameters, component properties and/or interaction properties, a step of storing component configuration parameters in a configuration database and/or storing of component properties and/or interaction properties in a component property database. In other words, the results of the analysis are stored in specialised databases for further processing. A component property database can be implemented as a so-called product database describing a catalogue of available products and its variations. The component property database may also be seen as a storage for features of a component which are given or pre-set due to its technical nature or function. For instance, a geometrical size can in most cases not be modified, and a certain interaction behaviour is usually seen as a given technical circumstance. In contrast, the configuration database may contain information of settings and changeable properties of a component.

According to an embodiment of the invention, the step of simulating the intralogistics system is furthermore based on assumed component configuration parameters and/or assumed interaction properties and/or assumed logistics parameters. A simulation scenario is always based on certain input variables, particularly at the beginning of an engineering cycle of an intralogistics system. To start an initial simulation, certain realistic assumptions must be made regarding the starting conditions of a simulation. For example, assumed component configuration parameters and/or assumed interaction properties and/or assumed logistics parameters can be based on historical data.

Logistics parameters can be defined as input variable for a simulation cycle comprising information regarding stock inventory, order details, order sequence, order time information, item information, order processing information and similar data related to the order itself and the logistic process as such. According to another embodiment of the invention, the step of simulating the intralogistics system is further based on logistics parameters derived from logistics process data of a real system. According to an example, the logistics parameters are derived from logistics process data of a real system. According to an example, logistics process data comprise information regarding stock inventory, order details, order sequence, order time information, item information, order processing information and similar data related to the order itself and the logistic process as such during an actual operation of a real system. An advantage may be seen in the ability to determine realistic input variables for the simulation in terms of the logistics parameters. In one example, the determination module is configured to convert logistics process data to logistics parameters.

According to an embodiment of the invention, the method comprises, after the step of determining the component configuration parameters, component properties and/or interaction properties of the intralogistics system, a step of subsequently simulating the intralogistics system based on the previously determined component configuration parameters, component properties and/or interaction properties. This describes a scenario of an iteration of the simulation process with the previously determined improved and modified parameters and properties as input variables for the respective next simulation cycle. In other words, a loop of subsequent simulation cycles can be performed to constantly improve results, whereas the previously assumed input variables are replaced with the results of the previous simulation cycle.

According to an embodiment of the invention, the method comprises, following the step of subsequently simulating the intralogistics system, a step of generating subsequent process data corresponding to the previously determined modified component configuration parameters with the simulation module. This means that in every new simulation cycle new corresponding process data is generated and can be stored in the process data storage and/or further processed.

In one embodiment of the invention, the step of determining modified component configuration parameters, component properties and/or interaction properties of the intralogistics system comprises a comparison of simulation process data with virtual commissioning process data and/or real-system process data by the determination module and, based on this comparison, a selecting of one of the simulation process data, virtual commissioning process data or real-system process data with regard to the predefined target variable of the intralogistics system. The determination module is, in other words, configured to assess different process data in relation to a predefined variable. For instance, if a throughput performance is chosen as a target variable, the different sets of process data may achieve an optimisation of this key performance indicator to a different degree. The determination module is furthermore configured to select that type of process data which provides the most contribution to the optimisation of this target variable. An advantage can be that process data from different stages of the provisioning cycle of an intralogistics system can now provide a much broader variety of available data and can therefore improve a quality of a subsequent simulation.

According to an example, the determination module is configured to determine assumed component configuration parameters and/or assumed interaction properties and/or assumed logistics parameters based on the selected process data. An advantage can be seen in an improvement of a quality of the above-mentioned parameters and properties aimed to achieve a more realistic simulation scenario. Furthermore, a quality of the prognosis of the assumed parameters and properties can be assessed.

In an embodiment of the invention, the method comprises, after comparing and selecting the process data, a step of subsequently simulating the intralogistics system and corresponding subsequent simulation process data based on the component configuration parameters, component properties, interaction properties and/or logistics parameters corresponding to the selected process data. This means that the simulation cycle is repeated once or more times with properties and parameters which may lead to an improved quality of a simulation. A quality of a simulation may be related to a degree of a matching of the simulated conditions with the conditions of a real system and/or a degree of achieving a target variable or key performance indicator.

According to an embodiment of the invention, the method comprises, before the step of simulating the intralogistics system, a step of deriving assumed component configuration parameters and/or assumed interaction properties and/or assumed logistics parameters by analysing process data by the determination module. As indicated above, the determination module is configured to analyse different kinds of process data, for instance, simulation process data, virtual commissioning process data, and real system process data, to support a prognosis by calculating corresponding input parameters and properties. These calculated input parameters and properties are referred to as assumed parameters and properties for a simulation cycle. An advantage can be seen in the ability of the system to assess a quality of a prognosis and to learn how to improve a simulation or a prognosis, particularly related to logistics parameters.

According to an embodiment of the invention, in the step of determining modified component configuration parameters and/or assumed interaction properties and/or assumed logistics parameters of the intralogistics system the determination module is based on a trained artificial neural network and/or machine learning. As described above, intralogistics systems are complex installations with hundreds and thousands of sensors, components and a massive amount of data to be processed. At the same time, dependencies and correlations are not always transparent and obvious due to complex interdependencies of such systems. Therefore, machine learning methods and in particular artificial neural networks are applied to process data and support decisions as classic implementations based on functions and logic dependencies may not provide sufficient quality of results.

According to an embodiment of the invention, the method further comprises a step of training the artificial neural network with simulation process data, virtual commissioning process data, real-system process data and corresponding component configuration parameters, component properties, logistics parameters and/or interaction properties. In other words, the artificial neural network introduced above is trained with a set of input data and/or output data of the several provisioning stages of the intralogistics system.

The previously calculated and derived modified component configuration parameters are, according to an embodiment of the invention, applied to a real system or a virtual commissioning system. Given that the components itself with their component properties and their interaction properties in a real system cannot be updated or changed, the changeable and adjustable parameters are now updated with the improved values from the simulation cycle or from the determination step. An advantage can be seen in the possibility to apply optimised configuration parameters to a variety and plurality of different intralogistics systems and customer implementations. In other words, also other customers may benefit from knowledge gains resulting from determination cycles and analysis of process data. The proposed method can therefore provide a significant benefit across the entire customer base of a company providing intralogistics systems.

According to an embodiment of the invention, the process data and/or component configuration parameters, component properties and/or interaction properties comprise component failure and/or component outage data. In large intralogistics systems failure events occur and are usually stored and processed. The determination module is configured to process known failure data and outage data in addition to the previously mentioned data to improve a quality of the modified parameters and properties in terms of a given key performance indicator.

In an aspect of the invention, an intralogistics system is provided, comprising a simulation module configured to simulate an intralogistics system based on configuration parameters, component properties, interaction properties and/or logistics parameters of the intralogistics system and to generate corresponding process data. The intralogistics system furthermore comprises a determination module configured to determine configuration parameters, component properties, logistics parameters and/or interaction properties of the intralogistics system based on process data. The determination module is configured to analyse process data and/or to determine configuration parameters, component properties, interaction properties and/or logistics parameters and/or to optimise a predefined target variable of the intralogistics system. In particular, the determination module is configured to analyse process data and determine configuration parameters, component properties, interaction properties and/or logistics parameters by analysing process data and thereby optimising the predefined target variable of the intralogistics system. According to an example, process data comprise simulation process data, virtual commissioning process data and/or real system process data.

In an embodiment of the invention, the predefined target variable is related to a cycle time, system performance, peak performance, system throughput, cost, energy consumption and/or component failures. According to an embodiment of the invention, a process data storage is configured for storing process data of the intralogistics system and is configured to allow low latency data access. An important advantage can be seen in the ability of the system to process data in real time. For example, a digital twin of all or at least a selection of process data, properties and parameters, sensor data and further information is provided for real-time analysis and, in order to support parallel simulation cycles. A process data storage may be particularly configured to support a real-time operation, data transmission and processing of an intralogistics system.

According to an embodiment of the invention, the process data storage comprises a format conversion module configured to convert process data into a unified process data format. As described above, a unified format may provide a significant advantage allowing a standardised and more effective data processing of different kinds of process data in a central location. A hardware unit specialised for conversion tasks can provide an advantage in terms of performance of data processing, data security and storage performance. In an embodiment of the invention, the intralogistics system further comprises a configuration storage for storing component configuration parameters.

The intralogistics system comprises, according to an embodiment of the invention a simulation scenario module configured to control the simulation module to perform iterative simulation cycles to generate a plurality of simulation process data sets based on a plurality of configuration parameters, component properties, logistics parameters and/or interaction properties. In many systems this module can also be referred to as experiment manager which is configured to generate sets of different process data based on different sets of simulation input variables.

The determination module is, according to an embodiment of the invention, configured to compare the simulation process data with virtual commissioning process data and/or real-system process data and is further configured to select, based on this comparison, one of the simulation process data, virtual commissioning process data or real-system process data regarding the predefined target variable of the intralogistics system. In other words, the determination module can decide whether a set of process data is preferred in the light of a predefined target variable.

An artificial neural network or a machine learning function is, according to an embodiment of the invention, used in the determination module. The artificial neural network and/or machine learning function is adapted to be trained with simulation process data, virtual commissioning process data, real-system process data and/or corresponding component configuration parameters, component properties, logistics parameters and/or interaction properties.

Further aspects of the invention relate to a computer program for determining operating conditions of an intralogistics system, which, when being executed by a processor, is adapted to carry out the steps of the method as described in the above and in the following as well as to a computer-readable medium, in which such a computer program is stored.

For example, the computer program may be executed in a processor of a control system of the intralogistics system. The computer-readable medium may be a memory of this control system. In general, a computer-readable medium may be a floppy disk, a hard disk, a USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, for example, the internet, which allows downloading a program code. The computer-readable medium may be a non-transitory or transitory medium.

It must be understood that features of the method as described in the above and in the following may be features of the computer program, the computer-readable medium and intralogistics system as described in the above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
- Figure 1: schematically shows an example of an intralogistics system.
- Figure 2: shows a first example of a method for determining operating conditions of an intralogistics system according to the invention.
- Figure 3: shows relevant building blocks of an intralogistics system according to a first example of the method according to the invention.
- Figure 4: shows a control and provisioning portion of an intralogistics system according to the invention.
- Figure 5: shows a second example of a method for determining operating conditions of an intralogistics system according to the invention.
- Figure 6: shows relevant building blocks of an intralogistics system according to the second example of the method according to the invention.
- Figure 7: shows a third example of a method for determining operating conditions of an intralogistics system according to the invention.
- Figure 8: shows relevant building blocks of an intralogistics system according to the third example of the method according to the invention.

The reference symbols used in the drawings, and their meanings, are listed in a summary form in the list of reference symbols. In principle, identical parts are provided with the same reference symbols in the figures.

### DETAILED DESCRIPTION OF EXEMPLARY EMBODIMENTS

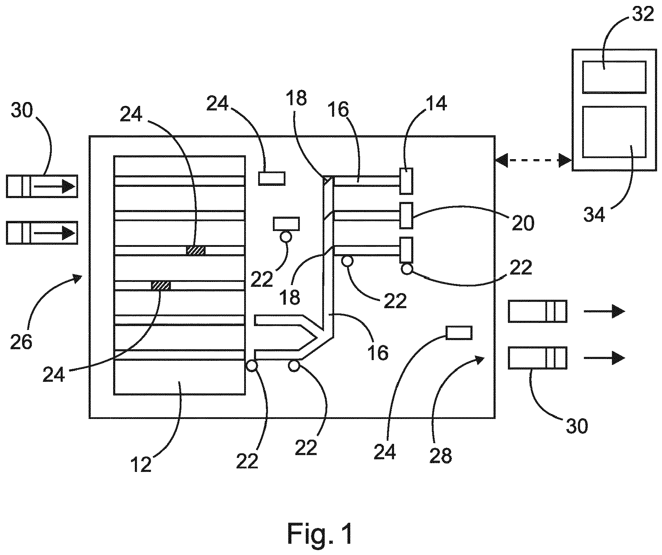

Fig. 1 shows a simplified view of an intralogistics system 10 with typical components. In this example, a distribution centre is described as an integrated intralogistics system 10 typically in one physical location. A variety of goods 36 is delivered, for instance, by trucks 30, then unloaded and stored in a storage system 12. In large distribution centres such storage systems 12 are partly or fully automated and comprise one or more transport vehicles 24, such as shuttles or shuttle systems or load systems. Such automated systems are capable to retrieve and store items 36, for instance items 36 such as totes, cartons or hanging goods. For further processing and order fulfilment, items 36 are forwarded by conveyor systems 16. Conveyors 16 can be implemented, for instance, as carton conveyors, tote conveyors or unit load conveyors. In addition, sorters 18 provide a capability to move goods and items between different conveyors 16 and define roads of items 36 through a distribution centre.

Furthermore, transport vehicles 24, such as shuttles, can complement the list of components used for moving items and goods 36 across the different stations in a distribution centre. Transport vehicles 24 can be partly or fully automated and move goods 36 across floors and aisles. For order processing and fulfilment workstations 14 are provided. Here, workers pick items 36 according to an item list of an order and place them in a customer carton. This task can optionally be automated using picking robots 20. Process orders can leave the distribution centre via an outgoing goods section 28 and be loaded to trucks 30 which transport goods to a next stage in a supply chain.

Controlling the processes and components of an intralogistics system 10 becomes a crucial piece of an operation of such a system. Therefore, a warehouse management system 32 and a material flow controller 34 are implemented along with the necessary user interfaces and external interfaces. To collect status information, several sensors 22 are deployed at different components of the intralogistics system. In figure 1 only examples of these sensors 22 are shown. Such IoT based sensor data processing systems for intelligent controlling of intralogistics systems 10 are known for the skilled person in this technical area.

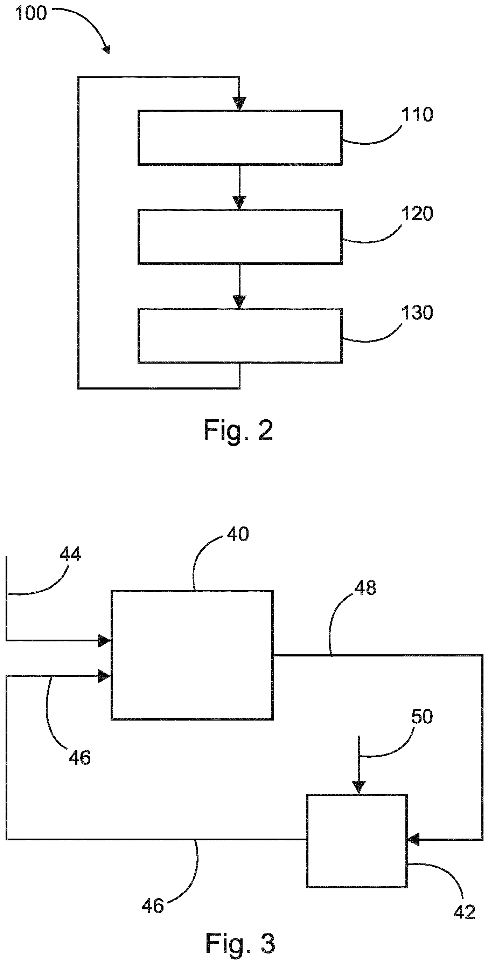

In figure 2 the simplified example of a method 100 for determining operating conditions of an intralogistics system 10 is shown. The method steps are described in conjunction with figure 3 where a simplified example of an intralogistics system 10 is described which supports the method 100. The intralogistics system 10 comprises several components. As described in figure 1, those components can be conveyors, shuttles, robots, workplaces, storage systems, forwarding systems, sorters and other components. Referring to figure 3, a simulation module 40 is provided. The simulation module 40 can, for instance, comprise a specialised software for simulation of an intralogistics system 10. Preferably, the simulation module 40 is designed to simulate a warehouse management system 60 and a material flow controller 62 as well as controls 70 and mechatronics 72 of the intralogistics system 10.

The method 100, according to figure 2, now comprises a step of simulating 110 an intralogistics system 10. Seen from this simulation module 40, input variables for a simulation are component configuration parameters 52, component properties 54 and/or interaction properties 56. For the purpose of this description of the exemplary embodiments, the component configuration parameters 52, component properties 54 and/or interaction properties 56 are briefly called parameters and properties. For instance, for an initial simulation cycle 110, assumed parameters and properties 44 can be applied. These assumed parameters and properties 44 can be based on historical data and/or experience from an operator or engineer. The simulation module 40 is configured to generate 120 simulation process data 48. Such process data 48 can be state information of components, measured values, positions, order information, and all other kinds of information that can describe a state of an intralogistics system 10. In other words, process data can be seen as the result of an operation of an intralogistics system 10, no matter if it is a real system, a completely simulated system, or a mix of both.

This simulation process data 48 is now provided to a determination module 42. This determination module 42 is configured to determine 130 modified parameters and properties 46 by analysing process data, here in particular simulation process data 48. This determination is based on an optimisation of a predefined target variable 50 of the intralogistics system 10. These modified parameters and properties 46 are now fed back in a loop logic as input variable for the simulation module 40. This loop can optionally be repeated by starting the method 100 from the beginning with step 110. The example described in figure 2 and figure 3 can be seen as a simplified basic principle of the method 100 for determining operating conditions of an intralogistics system 10.

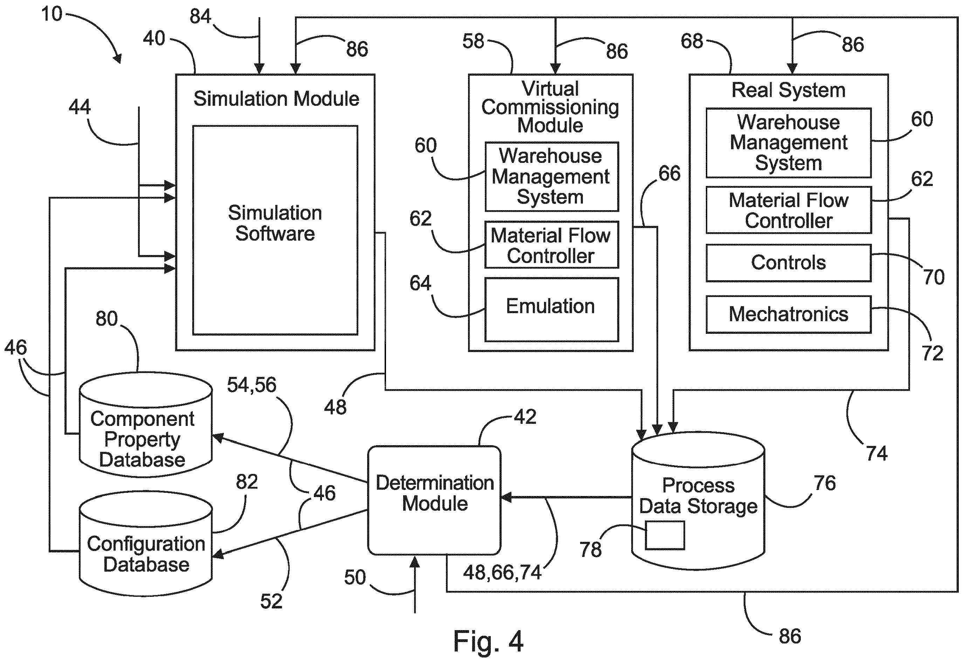

Now referring to figure 4, a provisioning and control system of an intralogistics system 10 is disclosed. In the upper part of the figure three stages of a provisioning cycle of an intralogistics system 10 are shown. A first stage comprises a simulation module 40 comprising a simulation software. This means that an entire intralogistics system 10 is virtually provided or fully simulated on a computer and a specialised software platform. Such a first simulation step 110 can be initiated with assumed parameters and properties 44. The simulation module 40 is configured to generate simulation process data 48.

In a next commissioning stage, a virtual commissioning module 58 is provided. This can refer to a constellation where a part of the main units of an intralogistics system 10 are provided physically and the rest is provided in a virtual or emulated way. Therefore, typical software like a warehouse management system 60 and a material flow controller 62 is provided. The warehouse management system 60 controls and manages the instances of a warehouse or a storage system 12, particularly inventory and storage locations. The material flow controller 62 manages and controls the processes and flows of material, goods and items 36 within a distribution centre or intralogistics system 10. The physical parts of the intralogistics system 10, such as the controls 70 and mechatronics 72, are emulated in an emulation unit 64 using electronic processing technology. For instance, the emulation unit 64 can be provided by means of a simulation software. Among others, input variables can be for example assumed parameters and properties 44 and/or modified parameters and properties 46, as described in the following. All these units and systems of the virtual commissioning module 58 are configured to generate virtual commissioning process data 66.

In a next provisioning stage, the productive real system 68 is provided. This means that the software, the controlling units and all electromechanical components are provided as a real system 68, for instance, in a customer location. This real system 68 can comprise identical or at least logically the same functional components as the previous modules 40, 58, in the provisioning stages. The previously emulated functions, for instance controls 70 and mechatronics 72, are now provided as real systems. The real system 68 is configured to generate real system process data 74.

The intralogistics system 10 is configured to store process data into a centralised process data storage 76. This process data may comprise process data from said modules, in particular simulation process data 48, virtual commissioning process data 66, and real system process data 74. It is important to note that the determination module is configured to analyse all different kinds of process data including the above-mentioned simulation process data 48, virtual commissioning process data 66, and real system process data 74. One of the challenges of processing process data from different sources can be seen in the differences in format and structure of the different process data. Therefore, the process data storage 76 comprises a format conversion module 78 which is configured to convert process data from different sources comprising different data formats into a unified process data format. In one example, the format conversion module 78 is implemented as individual data format modules 78 for each of the simulation module 40, the virtual commissioning module 58, or the real system 68.

A determination module 42 receives process data, for instance simulation process data 48, virtual commissioning process data 66 and/or real system process data 74. A target variable 50 or a combination of different target variables 50 is provided to the determination module 42 to allow an optimisation towards a key performance indicator. The determination module 42 then determines modified parameters and properties 46, particularly configuration parameters 52, component properties 54, and interaction properties 56. The component properties 54 and the interaction properties 56 are stored in a component property database 80, whereas the configuration parameters 52 are stored in a configuration database 82.

The nature of configuration parameters 52 can be seen as different to the extent that they can be changed and set, whereas the component properties 54 and the interaction properties 56 can be seen as given or pre-set properties of a component. Therefore, different databases 80, 82 may be provided for the respective purposes. The component property database 80 and the configuration database 82 can now provide updated or modified parameters and properties 46 as an input variable to the simulation module 40 replacing the initially assumed parameters and properties 44. According to an example, the modified parameters and properties 46 are provided to the virtual commissioning module 58, for instance as input variable. According to another example, the modified parameters and properties 46 are provided to the emulation unit 64 of the virtual commissioning module 58. An advantage can be seen in optimized or more realistic emulation results and/or improved results of the virtual commissioning module.

A simulating step 110 can, furthermore, comprise logistics parameters 86 which may comprise information about order items, order timing, order sequence, order status, stock data, SKU data (store keeping unit data), item lists and other information about the logistics process in particular. In one example, a first initial step of simulating 110 is based on initial logistics parameters 84. To improve a quality of a simulation, realistic logistics parameters are required. Now, the determination module 42 is, according to one example, configured to derive logistics parameters 86 from the process data 48, 66, 74.

In other words, actual and more realistic logistics data can replace previously assumed values and can help to improve the quality of the simulation. According to an example, the logistics parameters 86 are provided to the simulation module 40, the virtual commissioning module 58, and/or the real system 68. An advantage can be seen in an improvement of quality of the generated process data 48, 66, 72.

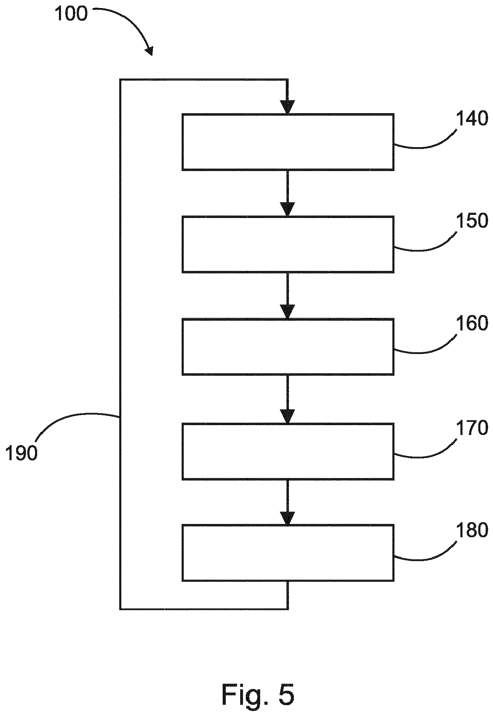

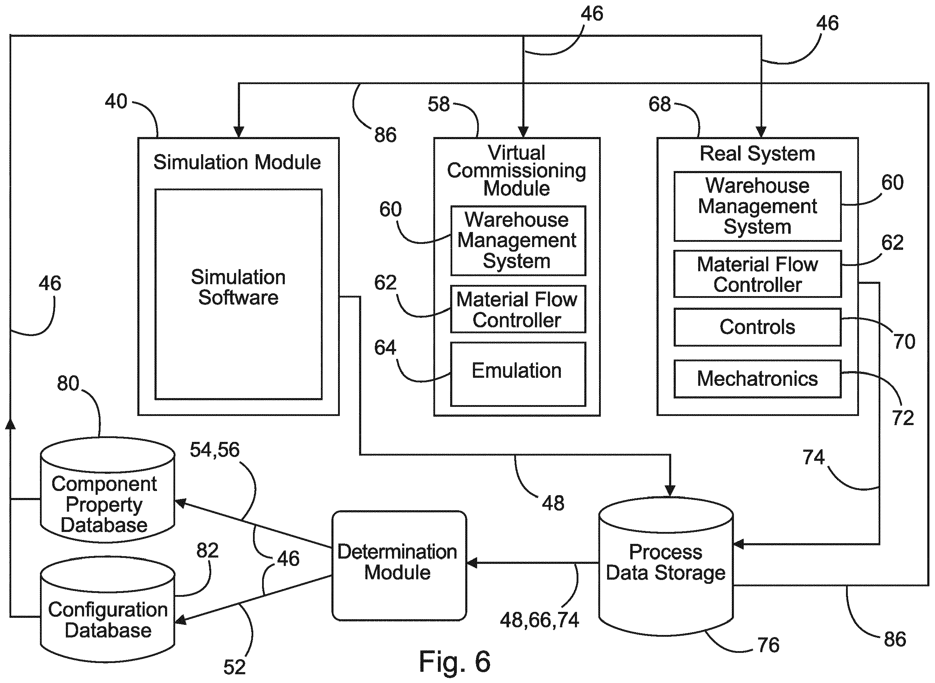

Referring to figure 5 and figure 6, another example of a method 100 for determining operating conditions of an intralogistics system 10 is disclosed, wherein figure 6 is supposed to support an understanding of the steps described in figure 5 showing relevant building blocks of an intralogistics system 10. The building blocks and generic structure of the intralogistics system 10 of figure 6 relate to the previously introduced and described drawing according to figure 4. In a first step 140 logistics process data is stored into a process data storage 76. In difference to the logistics parameters 86 serving as an input variable, for instance, for a simulation step 110, the logistics process data 88 are measured real data from a productive system. The process data storage 76 is configured to provide logistics parameters 86, according to a step 150, based on the previously obtained logistics process data 88. According to an example, the process data storage 76 is configured to convert logistics process data 88 into logistics parameters 86 for a simulation module 40.

In a subsequent step 160 the simulation module 40 simulates 160 an intralogistics system 10 and generates the corresponding simulation process data 48 Which can be stored in the process data storage 76 in a step 170 the determination module determines modified parameters and properties 46, particularly modified component configuration parameters 52, modified component properties 54 and/or modified interaction properties 56. Stored in the corresponding component property database 80 and/or the configuration database 82, particularly the modified component configuration parameters 52 can now be applied to the real system replacing previously set parameters. In other words, an advantage can be seen in an improvement cycle which takes real system behaviour as a basis for the determination of improved settings for the real system.

This sequence of steps can be, according to an example optionally be repeated or iterated 190 to further optimise and improve operating conditions of an intralogistics system 10. Another benefit can be seen in the ability to see differences and influencing factors caused by deviation from prognosis and can allow a quantification of this deviation. Furthermore, a setting of parameters of a real system can be adapted to the actual or real logistics and order situation at a customer's installation. According to an example, the modified parameters 46 determined in step 170 are presented to an operator for supporting user interactions for updating settings of a real system 68.

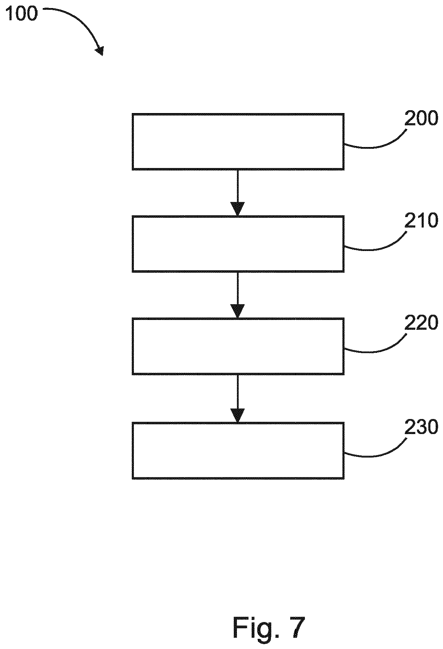

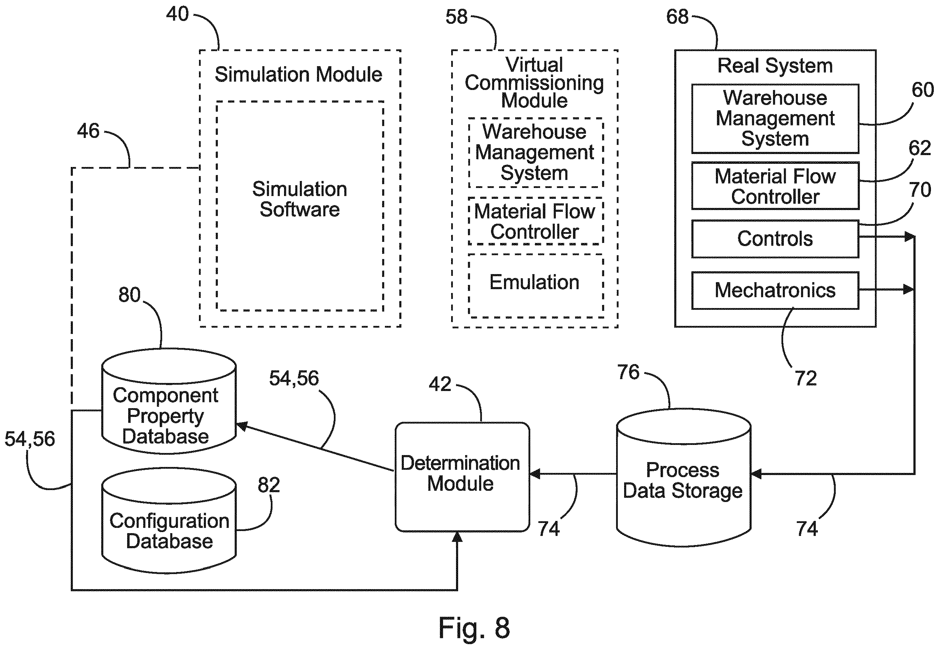

Figure 7 and figure 8 relate to a further example of the method 100 for determining operating conditions of an intralogistics system. The objective may be seen in an improvement of the product properties or component properties 54. In such complex intralogistics systems 10 components often show different properties in real installations compared to the component properties 54 stored in component property databases 80. To improve a quality of the component properties 54 a first step 200 relates to a capturing of real system process data 74. In one example, real system process data 74 originates from controls 70 and/or mechatronics 72 of the real system 68. In other words, the actual behaviour, or properties of the mechanical or electromechanical components and controls are observed and measured in the productive system in the customer location.

In step 210 the determination module 42 performs a determining of modified component properties 54 and/or modified interaction properties 56. In other words, the determination module 42 derives realistic and real component properties and/or interaction properties from measured, acquired, or captured real-world data. In a next step these improved or corrected component properties 54 and interaction properties 56 are stored 220 into the component property database 80. Now, these corrected component properties and parameters 54, 56 are provided back to the determination module 42 to update 230 a model of the determination module 42. According to an example, a model of the determination module 42 is based on an artificial neural network. According to an example, training data for the artificial neural network are based on the updated component properties 54 and/or the interaction properties 56. An advantage can be seen in an improved quality of the determination step 170 and 210 and therefore an improved quality of the results.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may provide the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: intralogistics system
- 12: storage system
- 14: workstations
- 16: conveyors
- 18: sorters
- 20: picking robots
- 22: sensors
- 24: transport vehicle
- 26: incoming goods
- 28: outgoing goods
- 30: truck
- 32: warehouse management system
- 34: material flow controller
- 36: good / item
- 40: simulation module
- 42: determination module
- 44: assumed parameters and properties
- 46: modified parameters and properties
- 48: simulation process data
- 50: target variable
- 52: component configuration parameters
- 54: component properties
- 56: interaction properties
- 58: virtual commissioning module
- 60: warehouse management system
- 62: material flow controller
- 64: emulation unit
- 66: virtual commissioning process data
- 68: real system
- 70: controls
- 72: mechatronics
- 74: real system process data
- 76: process data storage
- 78: format conversion module
- 80: component property database
- 82: configuration database
- 84: initial logistics parameters
- 86: logistics parameters
- 88: logistics process data

- 100: method for determining operating conditions
- 110: simulating an intralogistics system
- 120: generating process data
- 130: determining modified component configuration parameters, component properties and/or interaction properties
- 140: storing process data from real system into process data storage
- 150: providing logistics parameters
- 160: simulating intralogistics system and generating simulation process data
- 170: determining modified parameters and properties
- 180: applying modified parameters and properties to real system
- 190: iterating cycle for ongoing optimisation
- 200: capturing of real system process data
- 210: determining modified component properties and/or interaction properties
- 220: storing updated component properties and/or interaction properties into component property database
- 230: updating model of determination module

## Claims

1. A method (100) for determining operating conditions of an intralogistics system (10), wherein the intralogistics system (10) comprises a plurality of components, each component comprising component configuration parameters (52), component properties (54) and/or interaction properties (56), the method (100) comprising the steps of
- simulating (110) the intralogistics system (10) with a simulation module (40) based on component configuration parameters (52), component properties (54) and/or interaction properties (56),
- generating (120) process data (48) corresponding to the component configuration parameters (52), component properties (54) and/or interaction properties (56) with the simulation module (40),
- determining (130) modified component configuration parameters (52), component properties (54) and/or interaction properties (56) of the intralogistics system (10) with a determination module (42),
wherein the determination module (42) is configured to determine modified component configuration parameters (52), component properties (54) and/or interaction properties (56) by analysing process data (48, 66, 74) of the intralogistics system (10) and to optimise a predefined target variable (50) of the intralogistics system (10).

2. The method (100) according to claim 1, wherein the predefined target variable (50) is related to a cycle time, system performance, peak performance, system throughput, cost, energy consumption, order fulfilment rate and/or component failures.

3. The method (100) according to claim 1 or 2, wherein analysing process data (48, 66, 74) comprises a processing of simulation process data (48) of the simulation module (40) and/or virtual commissioning process data (66) of a virtual commissioning module (58) and/or real-system process data (74) from a real system (68).

4. The method (100) according to any of the claims 1 to 3, wherein generating process data (120) comprises a storing (140) of process data (48, 66, 74) in a centralised process data storage (76).

5. The method (100) according to claim 4, wherein, before storing (140) process data into the process data storage (76), the method (100) comprises a step of converting the process data (48, 66, 74) to a unified process data format.

6. The method (100) according to any of the claims 1 to 5, wherein, after determining modified component configuration parameters (52), component properties (54) and/or interaction properties (56), the method (100) comprises a step of storing (140) component configuration parameters (52) in a configuration database and/or storing of component properties (54) and/or interaction properties (56) in a component property database (80).

7. The method (100) according to any of the claims 1 to 6, wherein the step of simulating (110) the intralogistics system (10) is furthermore based on assumed component configuration parameters (52) and/or assumed interaction properties (56) and/or assumed logistics parameters (86).

8. The method (100) according to any of the claims 1 to 7, wherein the step of simulating (110) the intralogistics system (10) is further based on logistics parameters (86) derived from logistics process data of a real system (68).

9. The method (100) according to any of the claims 1 to 8, wherein, after the step of determining the modified component configuration parameters (52), component properties (54) and/or interaction properties (56) of the intralogistics system (10), the method (100) comprises a step of subsequently simulating (110) the intralogistics system (10) based on the previously determined modified component configuration parameters (52), component properties (54) and/or interaction properties (56).

10. The method (100) according to claim 9, wherein, following the step of subsequently simulating (110) the intralogistics system (10), the method (100) comprises a step of generating subsequent process data (48) corresponding to the previously determined modified component configuration parameters (52) with the simulation module (40).

11. The method (100) according to claim 10, wherein the step of determining (130) modified component configuration parameters (52), component properties (54) and/or interaction properties (56) of the intralogistics system (10) comprises a
- comparing of simulation process data (48) with virtual commissioning process data (66) and/or real-system process data (74) by the determination module (42) and, based on this comparison, and a
- selecting one of the simulation process data (48), virtual commissioning process data (66) or real-system process data (74) with regard to the predefined target variable (50) of the intralogistics system (10).

12. The method (100) according to claim 11, wherein, after comparing and selecting the process data, the method (100) comprises a step of subsequently simulating (110) of the intralogistics system (10) and generating corresponding subsequent simulation process data (48) based on the component configuration parameters (52), component properties (54), interaction properties (56) and/or logistics parameters (52) corresponding to the selected process data (48, 66, 74).

13. The method (100) according to any of the claims 1 to 12, wherein, before the step of simulating (110) the intralogistics system (10), the method (100) comprises a step of deriving assumed component configuration parameters (52) and/or assumed interaction properties (56) and/or assumed logistics process data (88) by analysing process data (48, 66, 74) by the determination module (42).

14. The method (100) according to claims 1 to 13, wherein in the step of determining (130) modified component configuration parameters (52) of the intralogistics system (10) the determination module (42) is based on a trained artificial neural network and/or machine learning.

15. The method (100) according to claim 14, wherein the method (100) further comprises the step of training the artificial neural network with simulation process data (48), virtual commissioning process data (66), real-system process data (74) and corresponding component configuration parameters (52), component properties (54) and/or interaction properties (56).

16. The method (100) according to any of the claims 1 to 15, wherein the method (100) further comprises a step of applying the modified component configuration parameters (52) to the virtual commissioning module (58) and/or the real system (68).

17. The method (100) according to any of the claims 1 to 16, wherein the process data and/or component configuration parameters (52), component properties (54) and/or interaction properties (56) comprise component failure and/or component outage data.

18. An intralogistics system (10) comprising:
- a plurality of components, each component comprising component configuration parameters (52), component properties (54) and/or interaction properties (56),
- a simulation module (40) configured to simulate an intralogistics system (10) based on component configuration parameters (52), component properties (54), interaction properties (56) and/or logistics parameters (86) of the intralogistics system (10) and to generate corresponding process data (48),
- a determination module (42) configured to determine modified component configuration parameters (52), component properties (54) and/or interaction properties (56) of the intralogistics system (10) by analysing process data (48, 66, 74) of the intralogistics system (10) and to optimise a predefined target variable (50) of the intralogistics system (10).

19. The intralogistics system (10) according to claim 18, wherein the predefined target variable (50) is related to a cycle time, system performance, peak performance, system throughput, cost, energy consumption, order fulfilment rate and/or component failures.

20. The intralogistics system (10) according to any of the claims 18 to 19, further comprising a process data storage (76) configured for storing process data (48, 66, 74) of the intralogistics system (10) and is configured to allow low latency data access.

21. The intralogistics system (10) according to claim 20, wherein the process data storage (76) comprises a format conversion module (78) configured to convert process data into a unified process data format.

22. The intralogistics system (10) according to any of the claims 18 to 21, further comprising a configuration database (82) for storing component configuration parameters (52).

23. The intralogistics system (10) according to any of the claims 18 to 22, further comprising
- a simulation scenario module configured to control the simulation module (40) to perform iterative simulation cycles to generate a plurality of simulation process data (48) sets based on a plurality of component configuration parameters (52), component properties (54), logistics parameters (86) and/or interaction properties (56).

24. The intralogistics system (10) according to any of the claims 18 to 23, wherein the determination module (42) is configured to
- compare the simulation process data (48) with virtual commissioning process data (66) and/or real-system process data (74) and is further configured to
- select, based on this comparison, one of the simulation process data (48), virtual commissioning process data (66) or real-system process data (74) with regard to the predefined target variable (50) of the intralogistics system (10).

25. The intralogistics system (10) according to any of the claims 18 to 24, wherein the determination module (42) is based on an artificial neural network and/or a machine learning function;
wherein the artificial neural network and/or machine learning function is adapted to be trained with simulation process data (48), virtual commissioning process data (66), and/or corresponding component configuration parameters (52), component properties (54), logistics parameters (86) and/or interaction properties (56).

26. A computer program for determining operating conditions of an intralogistics system (10), which, when being executed by a processor, is adapted to carry out the steps of the method (100) according to one of the claims 1 - 17.

27. A computer-readable medium, in which a computer program according to claim 26 is stored.
